# FASCICULE DE BREVET EUROPEEN

(11) **EP 0 566 460 B1**
(45) Date de publication et mention de la délivrance du brevet: **02.11.1995**
(21) Numéro de dépôt: 93400934.1
(22) Date de dépôt: 09.04.1993
(51) Int. Cl.: B62D 25/06

(54) **Structure de raccordement d'un panneau de pavillon de véhicule automobile à une ossature périphérique**
Verbindungsstruktur für die Befestigung einer Autodachplatte an den sie umgebenden Rahmenabschnitten
Connection structure between a car roof panel and the surrounding frame elements

(30) Priorité: 10.04.1992 FR 9204395
(43) Date de publication de la demande: 20.10.1993
(73) Titulaire: REGIE NATIONALE DES USINES RENAULT S.A., 92109 Boulogne Billancourt (FR)
(72) Inventeur: Demaldent, Jean-Michel, F-78580 Maule (FR); Moussy, François, F-92500 Rueil Malmaison (FR); Vincent, Philippe, F-92500 Rueil Malmaison (FR)
(74) Mandataire: Ernst-Schonberg, Michel

(56) Documents cités:
- EP-A- 0 126 895
- FR-A- 2 632 923
- GB-A- 2 035 920
- US-A- 5 022 704

## Description

L'invention concerne une structure de raccordement d'un panneau de pavillon de véhicule automobile à une ossature périphérique.

L'invention concerne plus particulièrement une telle structure de raccordement à une ossature de soutien constituée par des éléments longitudinaux et transversaux qui s'étendent sur toute la longueur et la largeur du panneau.

La publication FR-A-2576862 décrit un panneau de pavillon fixé à un cadre rigide.

Pour raccorder et fixer le panneau de pavillon à un cadre ou ossature périphérique il est courant de coller le panneau au cadre.

La publication GB-A-511 210 décrit un assemblage de panneau de pavillon à une structure assemblée avec formation d'une gouttière d'écoulement d'eau.

Ce type d'assemblage est difficile à réaliser avec précision et avec une bonne qualité d'étanchéité.

Ceci tient au fait que l'assemblage nécessite simultanément le positionnement rapide et définitif du panneau de pavillon et la confection des liaisons de raccordement nécessaires.

Le but de l'invention est de perfectionner une structure de pavillon du type précité de manière à favoriser l'immobilisation définitive du panneau de pavillon après le prépositionnement précis de celui-ci.

Un autre but de l'invention est de faciliter le positionnement du panneau de pavillon sans précautions particulières sur une ossature périphérique.

Suivant l'invention, les éléments longitudinaux et l'un des éléments transversaux de l'ossature périphérique de soutien du panneau de pavillon possèdent un épaulement d'accrochage des bords du panneau et ledit épaulement se prolonge par une surface de soutien du bord latéral du panneau.

Dans la structure ainsi réalisée il est possible d'immobiliser le pavillon par coincement entre le bord de soutien et un profil de clipsage avec une étanchéité acceptable, indépendante de la qualité du collage préconise.

La structure proposée réalise aussi l'étanchéité en réponse aux caractéristiques de raccordement parmi lesquelles, la configuration des liaisons entre le pavillon et l'ossature, ne nécessite pas une grande précision d'emboutissage du panneau de pavillon.

La structure conforme à l'invention se caractérise également par l'application de profilés creux à nervures extérieures de montage de profils d'étanchéité.

Selon un mode de réalisation du profilé, ce dernier est d'une part intégré à une traverse susceptible de porter un caisson de montage d'accessoires extérieurs de la carrosserie et d'autre part assemblé à un autre profit par l'intermédiaire d'éléments fonctionnels de raccordement du panneau de pavillon.

D'autres caractéristiques et avantages de l'invention apparaîtront à la lecture de la description d'un exemple de réalisation de la structure de raccordement du panneau de pavillon à l'ossature du véhicule en référence au dessin annexé dans lequel :
- la figure 1 est une représentation schématique de la partie supérieure de la carrosserie de véhicule.
- la figure 2 est une section suivant la ligne II de la figure 1, du panneau de pavillon et de l'ossature, dans la région d'une porte latérale du véhicule.
- la figure 3 est une section suivant la ligne III de la figure 1, du panneau de pavillon et de t'ossature dans la région du pare-brise du véhicule.
- la figure 4 est une section suivant la ligne IV de la figure 1, du panneau de pavillon et de l'ossature dans la région du hayon arrière.
- les figures 5 à 9 sont des représentations perspectives des phases de réalisation de la structure de raccordement du panneau de pavillon avec le montant arrière de celui-ci.

Le pavillon de véhicule automobile représenté sur le dessin est constitué par un panneau 1 qui est bordé latéralement par un cadre de porte 2. Les cotés transversaux avant et arrière du panneau 1 s'étendent respectivement le long du pare-brise 3 et le long de la partie supérieure du hayon 4.

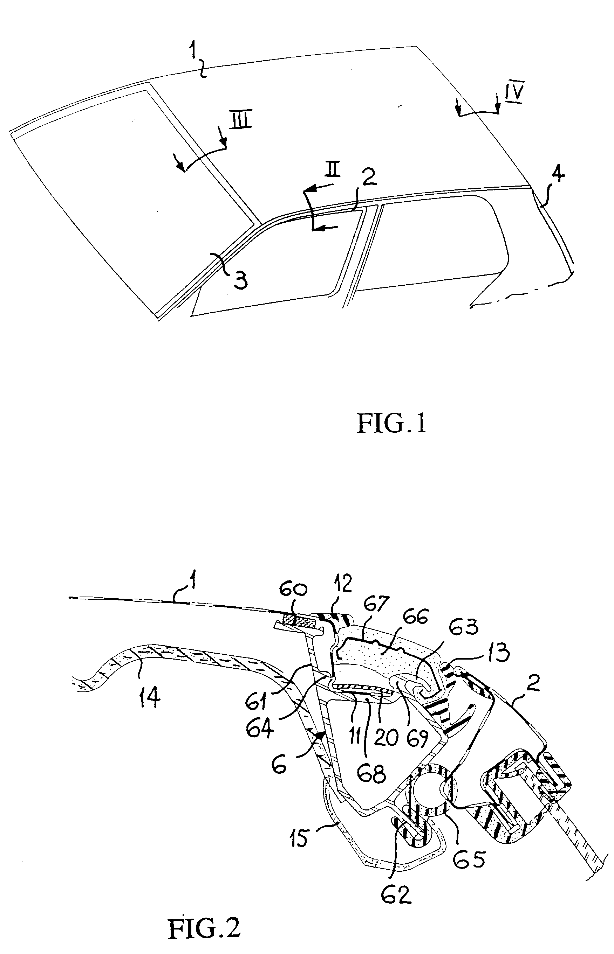

Ainsi que cela ressort des figures 2 à 4, le panneau 1 borde une ossature périphérique constituée à titre d'exemple par des profils fermés creux en aluminium 6, 7, 8 qui s'étendent respectivement latéralement et transversalement sur toute la longueur et la largeur du panneau 1.

La figure 2 montre plus en détail le profil longitudinal 6.

Celui-ci affecte la forme d'une poutre creuse dont la paroi extérieure porte des nervures extérieures 61, 62, 63.

La nervure 61 constitue l'épaulement d'accrochage et de rétention transversal du panneau 1.

La nervure 62 permet le montage et la retenue du profil d'étanchéité 65 du cadre 2 de la porte.

La nervure 63 assure l'accrochage d'un profil enjoliveur 66 à armature interne 67 destiné à masquer le bord latéral 11 du panneau 1.

La nervure 61 porte par ailleurs à son sommet une surface de collage 60 du panneau 1 et à sa base un bourrelet de retenue 64 orienté vers un bourrelet de coincement 69 porté par la nervure 63 dans le but de délimiter une surface de soutien 68 qui s'étend le long du profil creux 6 et sur laquelle repose le bord 11 du panneau afin de faciliter le montage d'un profil de clipsage 20 du bord 11 du panneau 1.

La figure 2 montre en outre les étanchéités additionnelles destinées à limiter l'intensité des sifflements au cours de l'avancement du véhicule.

A cet effet le profil enjoliveur 66 est associé à des profils d'étanchéité additionnels 12, 13 tournés respectivement vers le pavillon et le cadre 2 de la porte.

Une garniture intérieure 14 et son profil de retenue 15 masquent l'ensemble du profilé 6.

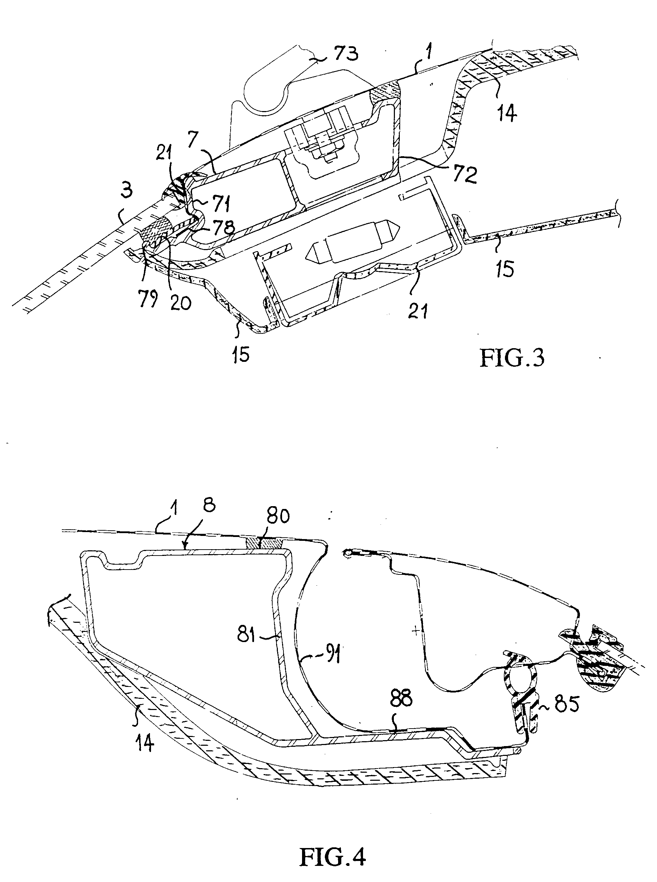

La figure 3 montre plus en détail le profil transversal 7 qui supporte le pare-brise collé 3. D'une manière analogue aux dispositions décrites en référence à la figure 2, le profil 7 possède un épaulement 71 d'accrochage d'un bord transversal 21 du panneau 1 et se prolonge par une surface de soutien 78 dudit bord. La surface de soutien 78 est par ailleurs limitée par un bourrelet de coincement 79 d'un profil de clipsage 20. Une surface de collage est prévue sur un élément transversal intégré au profil 7 constitué par un caisson 72 de montage d'une antenne radio 73 et plus généralement de tout autre accessoire extérieur de carrosserie (gyrophare, fixation de galerie, etc....).

De même la garniture intérieure 14 et son profil de retenue 15 masquent et enveloppent l'ensemble du profil 7.

Le profil de retenue 15 possède par ailleurs une partie médiane réalisée sous la forme d'une console de réception d'accessoires tels qu'un éclairage 21 d'habitacle ou un récepteur de commande de serrures de véhicule.

La figure 4 montre plus en détail le profil transversal 8 qui possède également un épaulement 81 et une nervure à surface de soutien 88 du bord arrière du panneau 1 du pavillon porteur d'un profil d'étanchéité 85.

Une surface de collage 80 est prévue sur le sommet du profil 8 et ce dernier est enveloppé ainsi que cela vient d'être dit par la garniture intérieure 14.

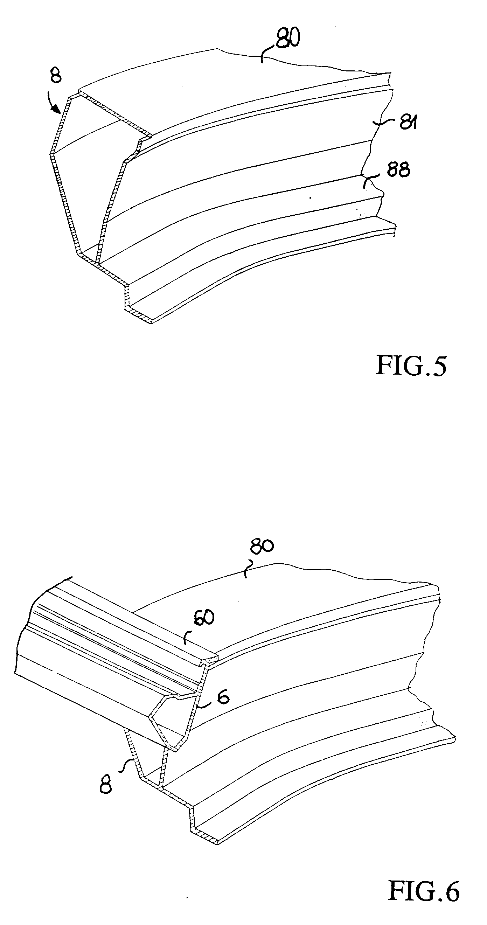

Ainsi que cela est montré aux figures 5 à 9 on réalise la structure de raccordement du panneau 1 par une succession de phases d'assemblage.

La figure 5 montre en perspective une partie du profil transversal 8 sur lequel on reconnait la surface de collage 80, la surface de soutien 88 et l'épaulement 81.

La figure 6 montre l'accostage du profit transversal 8 avec le profil longitudinal 6. On remarque notamment que la surface de collage 60 est encastrée dans la partie terminale de la surface de collage 80 qui possède à cet effet une interruption locale pour permettre l'encastrement de la surface 60. Cette manière de procéder permet aux surfaces de collage 60, 80 des profils 6,8 de rester coplanaires.

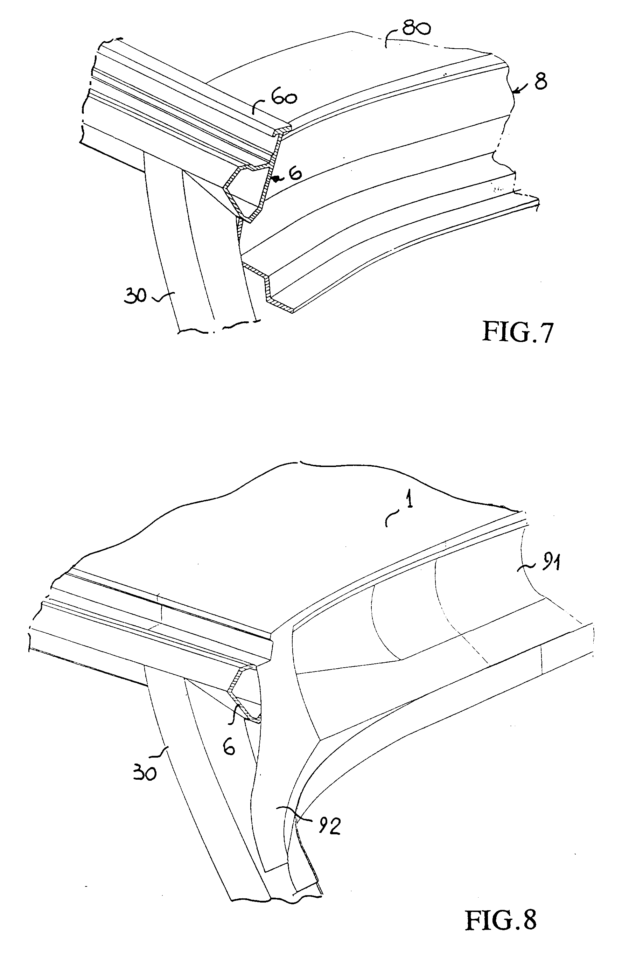

La figure 7 montre l'accostage du montant arrière 30 du panneau 1 au contact du profil longitudinal 6 prépositionné par rapport au profil transversal 8.

La figure 8 montre l'assemblage du panneau 1 de pavillon avec les éléments structurels 6, 8, 30 représentés à la figure 7.

Il y a lieu de remarquer que :
- le détail de la liaison du panneau 1 avec le profit 6 est représenté à la figure 2.
- le détail de la liaison du panneau 1 avec le profit 8 est représenté à la figure 4.

Le panneau 1 du pavillon possède un bord arrière 91 qui enveloppe le profit transversal 8 préalablement assemblé au profit longitudinal 6. Le panneau 1 possède également des oreilles latérales 92 en appui d'assemblage respectif sur chaque montant arrière 30 de l'ossature formée par les profits 6, 7, 8 à la périphérie du pavillon.

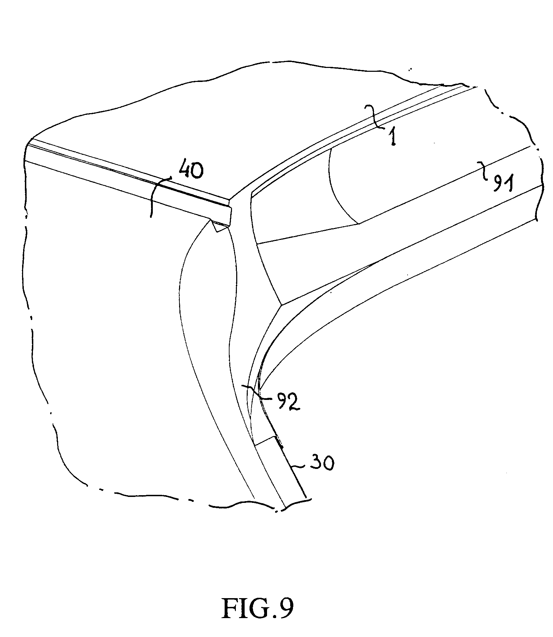

Ainsi que cela est représenté à la figure 9, le noeud d'assemblage des éléments d'ossature 6, 8, 30 est recouvert par un panneau latéral 40 de la carrosserie du véhicule.

## Revendications

1. Structure de raccordement d'un panneau (1) de pavillon de véhicule automobile à une ossature périphérique (6, 7, 8) constituée par des éléments longitudinaux (6) et transversaux (7, 8) qui s'étendent sur toute la longueur et la largeur du panneau (1), caractérisée par le fait que les éléments longitudinaux (6) et l'un des éléments transversaux (7) possèdent un épaulement (61, 71) d'accrochage des bords du panneau (1) et que ledit épaulement se prolonge par une surface (68, 78) de soutien du bord latéral (11, 21) du panneau.

2. Structure selon la revendication 1, caractérisée par te fait que la surface de soutien (68, 78) des extrémités latérales du panneau (1) de pavillon porte un moyen de coincement (69, 79) d'un profil de clipsage (20) dudit panneau.

3. Structure selon la revendication 2, caractérisée par le fait que la surface de soutien (68) s'étend le long d'un profit creux (6) à nervures extérieures de montage (62, 61) de profils d'étanchéité (65) et de collage du panneau (1) de pavillon.

4. Structure selon t'une quelconque des revendications 1 ou 2, caractérisée par le fait que le profit (7) est intégré à un élément de traverse portant un caisson (72) de montage d'accessoires (73) extérieurs de carrosserie et est enveloppé par une garniture intérieure (14) de pavillon.

5. Structure selon l'une quelconque des revendications 1 à 3, caractérisée par le fait que te panneau (1) de pavillon possède un bord enveloppant une traverse (8) assemblée à un profit longitudinal (6) et une oreille (92) d'appui sur un montant (30) arrière de l'ossature (6, 7, 8).

6. Structure selon la revendication 5, caractérisée par le fait que des surfaces de collage (60, 80) des profils longitudinaux et transversal (6, 8) sont sensiblement coplanaires et que l'une des surface de collage (80) est interrompue dans sa zone d'encastrement avec l'autre surface de collage (60).

7. Structure selon la revendication 5, caractérisée par le fait que chaque profil longitudinal (6) forme avec le profit transversal (8) un noeud d'assemblage avec te montant arrière (30) du panneau (1) du pavillon.

## Claims

1. A structure for connecting a motor vehicle roof panel (1) to a peripheral frame assembly (6, 7, 8) formed by longitudinal (6) and transverse (7, 8) elements which extend over the entire length and width of the panel (1) characterised in that the longitudinal elements (6) and one of the transverse elements (7) have a shoulder (61, 71) for latching engagement of the edges of the panel (1) and that said shoulder is extended by a surface (68, 78) for supporting the lateral edge (11, 21) of the panel.

2. A structure according to claim 1 characterised in that the surface (68, 78) for supporting the lateral ends of the roof panel (1) carries a means (69, 79) for wedging a clipping member (20) for said panel.

3. A structure according to claim 2 characterised in that the support surface (68) extends along a hollow member (6) with external ribs (62, 61) for bunting members (65) for affording a seal and for glueing the roof panel (1) in position.

4. A structure according to either one of claims 1 and 2 characterised in that the member (7) is integrated in a transverse element bearing a box bans (72) for fitting external body accessories (73) and is enclosed by an internal roof lining (14).

5. A structure according to any one of claims 1 to 3 characterised in that the roof panel (1) has an edge enclosing a transverse portion (8) which is assembled to a longitudinal member (6) and a lug (92) for support on a rear pillar (30) of the frame assembly (6, 7, 8).

6. A structure according to claim 5 characterised in that surfaces (60, 80) for glueing of the longitudinal and transverse members (6, 8) are substantially coplanar and that one of the glueing surfaces (80) is interrupted in its zone in which it fits to the other glueing surface (60).

7. A structure according to claim 5 characterised in that each longitudinal member (6) forms with the transverse member (8) a join for assembly to the rear pillar of the roof panel (1).

## Patentansprüche

1. Verbindungsstruktur für die Befestigung einer Kraftfahrzeug-Dachplatte (1) an dem sie umgebenden Rahmen (6, 7, 8), der aus Längselementen (6) und Querelementen (7, 8) besteht, die sich über die gesamte Länge und Breite der Dachplatte (1) erstrecken, **dadurch gekennzeichnet**, daß die Längsplatte (6) und eines der Querelemente (7) einen Befestigungsabsatz (61, 71) für die Ränder der Dachplatte (1) aufweisen, und daß dieser Absatz durch eine Stützfläche (68, 78) für den Seitenrand (11, 21) der Dachplatte verlängert ist.

2. Struktur nach Anspruch 1, **dadurch gekennzeichnet**, daß die Stützfläche (68, 78) der seitlichen Enden der Dachplatte (1) eine Klemmanordnung (69, 79) für ein Klemmprofil (20) der Dachplatte trägt.

3. Struktur nach Anspruch 2, **dadurch gekennzeichnet**, daß sich die Stützfläche (68) entlang eines Hohlprofils (6) erstreckt, das mit Außenrippen (62, 61) für die Montage von Dichtprofilen (65) und für die Verklebung der Dachplatte (1) versehen ist.

4. Struktur nach einem der Ansprüche 1 oder 2, **dadurch gekennzeichnet**, daß das Profil (7) in ein Querelement integriert ist, das ein Gehäuse (72) zur Aufnahme von äußeren Karosseriezubehörteilen (73) trägt und von einem inneren Dacheinsatz (14) umgeben ist.

5. Struktur nach einem der Ansprüche 1 bis 3, **dadurch gekennzeichnet**, daß die Dachplatte (1) einen Rand aufweist, der eine Strebe (8) umgibt, die mit einem Längsprofil (6) verbunden ist und ein Horn (92) zur Abstützung auf einem hinteren Pfosten (30) des Rahmens (6, 7, 8).

6. Struktur nach Anspruch 5, **dadurch gekennzeichnet**, daß die Klebeflächen (60, 80) der Längs- und Querprofile (6, 8) im wesentlichen koplanar sind, und daß eine der Klebeflächen (80) an ihrer Eingriffsstelle mit der anderen Klebefläche (60) unterbrochen ist.

7. Struktur nach Anspruch 5, **dadurch gekennzeichnet**, daß jedes Längsprofil (6) mit dem Querprofil (8) einen Knotenpunkt mit dem hinteren Pfosten (30) für die Dachplatte (1) bildet.
